# EUROPEAN PATENT SPECIFICATION

(11) **EP 1 986 087 B1**
(45) Date of publication and mention of the grant of the patent: **20.11.2013**
(21) Application number: 08008054.2
(22) Date of filing: 25.04.2008
(51) Int. Cl.: G06F 3/01, G06F 3/0488, G06F 3/0483, G06F 3/0485, G06F 3/0481

(54) **Touch-based tab navigation method and related device**
Berührungsbasiertes Reiternavigationsverfahren und zugehörige Vorrichtung
Procédé de navigation parmi des onglets basé sur le toucher et dispositif associé

(30) Priority: 27.04.2007 US 914323 P; 02.05.2007 US 915440 P
(43) Date of publication of application: 29.10.2008
(73) Proprietor: HTC Corporation, Taoyuan County 330 (TW)
(72) Inventor: Bamford, Drew High Tech Computer Corp., Taoyuan City Taoyuan County (TW)
(74) Representative: Görz, Ingo

(56) References cited:
- EP-A2- 0 459 174
- US-A- 5 416 895
- US-A- 5 721 852
- US-A1- 2002 122 066
- US-A1- 2004 085 364
- US-A1- 2004 100 479
- US-A1- 2005 003 870

## Description

The present invention relates to touch-based tab navigation method for a portable electronic device.

As the market for portable electronic devices develops, the number of functions that the portable electronic devices are capable of performing increases greatly. Along with a larger number of functions comes a need to navigate through a user interface of the portable electronic devices in order to access these functions. Graphical user interfaces are now commonly used due to their advantages of being clear and intuitive.

Conventional navigation systems can be cumbersome to use, and are not always convenient for users using small touch-sensitive displays such as those found on a personal digital assistant (PDA) or a smart phone. Instead, there is a need for a simple and intuitive touch-based navigation system that lets users of small touch-sensitive input devices quickly navigate through the user interface.

US 2005/0003870 A1 discloses to navigate between a plurality of tabs arranged in a predetermined direction on a screen page via a side controller. Every time the side controller control switch is pushed perpendicular to a screen page showing the tabs, one of the tabs sequentially selected is shifted and activated.

This in mind, the present invention aims at providing a touch-based tab navigation method and related device.

This is achieved by a method of navigating between different tabs in a user interface of a portable digital information device according to claim 1. The dependent claims pertain to corresponding further developments and improvements.

As will be seen more clearly from the detailed description following below, the claimed method provides users with a convenient way of navigating between numerous tabs in a graphical user interface, and allows quick access to tabs that are not currently shown on the display. In addition, users can rely on muscle memory to choose commonly selected tabs without having to look at the display. This can further be enhanced with haptic feedback or sound feedback for allowing the user to know how many discrete positions the tabs have been moved.

In the following, the invention is further illustrated by way of example, taking reference to the accompanying drawings. Thereof
Fig.1 is a diagram showing three different tab-based navigation systems according to the prior art.
Fig.2 is a screen showing another tab-based navigation system according to the prior art.
Fig.3 illustrates three text boxes according to the prior art.
Fig.4 is a functional block diagram of a portable digital information device according to the present invention.
Fig. 5 is a top view of an embodiment of the portable digital information device according to the present invention.
Figs.6-8, which show the contents of the display of the portable digital information device when different tabs of the navigation section are chosen as the selected tab.
Figs.9 and 10 illustrate a displayed segment and non-displayed segments of the navigation section.

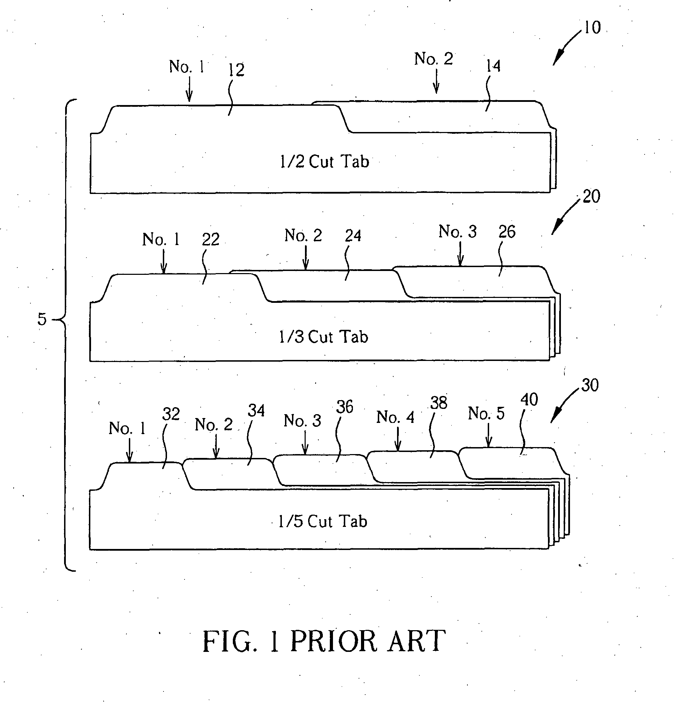

Please refer to Fig.1. Fig.1 is a diagram 5 showing three different tab-based navigation systems according to the prior art. Screen 10 shows a 1/2 cut tab providing a choice of tab 12 and tab 14. Screen 20 shows a 1/3 cut tab providing a choice of tab 22, tab 24, and tab 26. Screen 30 shows a 1/5 cut tab providing a choice of tab 32, tab 34, tab 36, tab 38, and tab 40. The tab-based navigation system makes it easy for users to not only see which tab is open, but to also see other available tabs that are not being viewed.

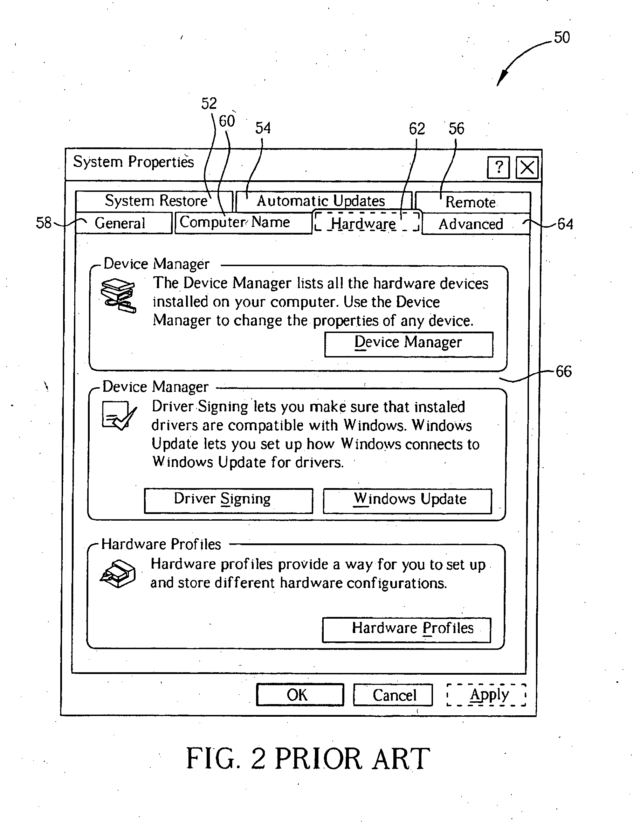

Please refer to Fig. 2. Fig. 2 is a screen 50 showing another tab-based navigation system according to the prior art. Screen 50 shows tabs 52, 54, 56, 58, 60, 62, and 64. Tab 62 is currently open, whereas the other tabs 52, 54, 56, 58, 60, and 64 are not being viewed. A menu 66 corresponding to tab 62 is shown, and provides options for the user corresponding to tab 62.

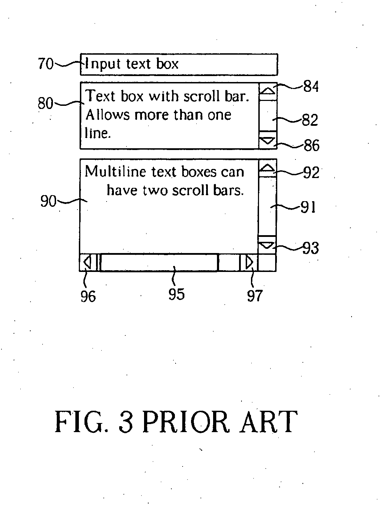

Please refer to Fig.3. Fig.3 illustrates three text boxes 70, 80, and 90 according to the prior art. Text box 70 has been designed to have a fixed width and a fixed height, and does not have any scroll bars. Text box 80 has a fixed width and a variable height, and therefore has a scroll bar 82 containing directional arrow icons 84 and 86 for scrolling up and down. Text box 90 has a variable width and a variable height, and therefore has a scroll bar 91 containing directional arrow icons 92 and 93 for scrolling up and down, as well as a scroll bar 95 containing directional arrow icons 96 and 97 for scrolling left and right.

Although the prior art navigation systems shown in Figs. 1-3 are functional, the navigation systems can be cumbersome to use, and are not always convenient for users using small touch-sensitive displays such as those found on a personal digital assistant (PDA) or a smart phone. Instead, there is a need for a simple and intuitive touch-based navigation system that lets users of small touch-sensitive input devices quickly navigate through the user interface.

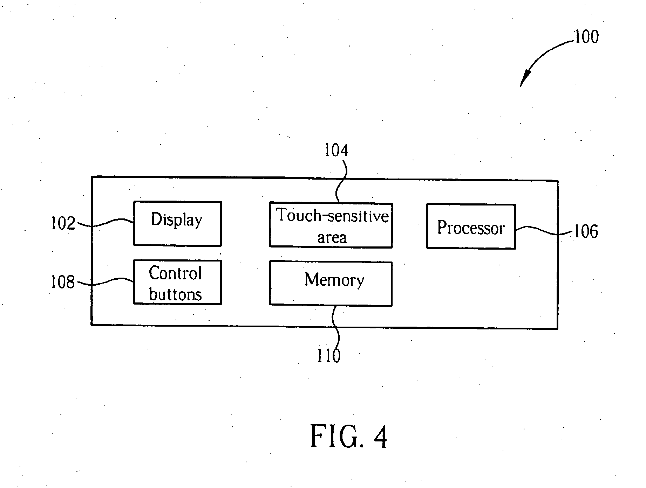

Please refer to Fig. 4. Fig.4 is a functional block diagram of a portable digital information device 100. The portable digital information device 100 comprises a display 102, a touch-sensitive area 104, a processor 106, control buttons 108, and a memory 110. The touch-sensitive area 104 may be installed on the portable digital information device 100 separately from the display 102, or can be a part of the display 102, in which case the display 102 is a touch-sensitive display. The touch-sensitive area 104 is adapted for receiving input from a user's finger for controlling operation of the portable digital information device 100, although other input devices such as a stylus may also be used. The processor 106 controls operation of the portable digital information device 100 and controls the graphics shown on the display 102 in response to input received from the touch-sensitive area 104 or the control buttons 108. The memory 110 stores user data and application programs of the portable digital information device 100.

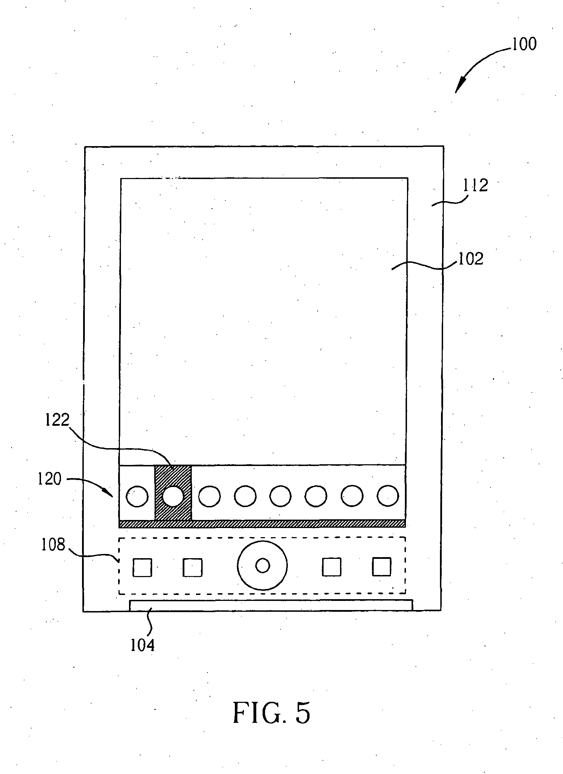

Please refer to Fig. 5. Fig. 5 is a top view of a portable digital information device 100. The portable digital information device 100 comprises a housing 112 on which the display 102, the touch-sensitive area 104, and the control buttons 108 are installed. One portion of the display 102 shows a navigation section 120 that is used for navigating through menus of the user interface for the portable digital information device 100. The navigation section 120 preferably contains a plurality of tabs that are represented by icons, and a selected tab 122 is highlighted for indicating which menu item the user is currently viewing.

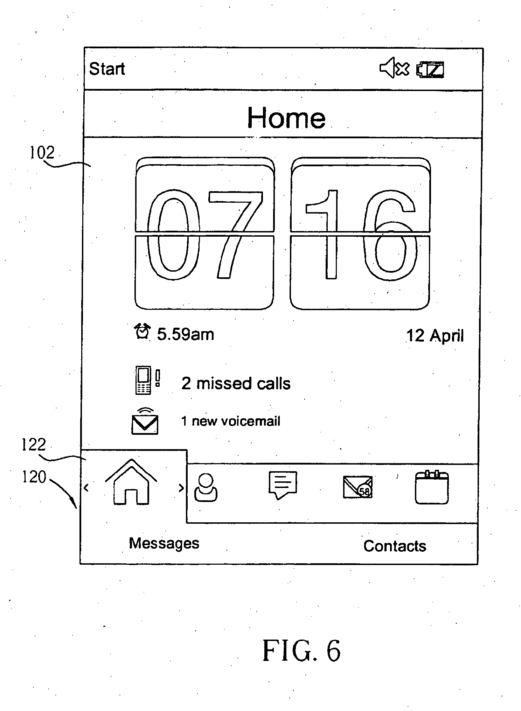

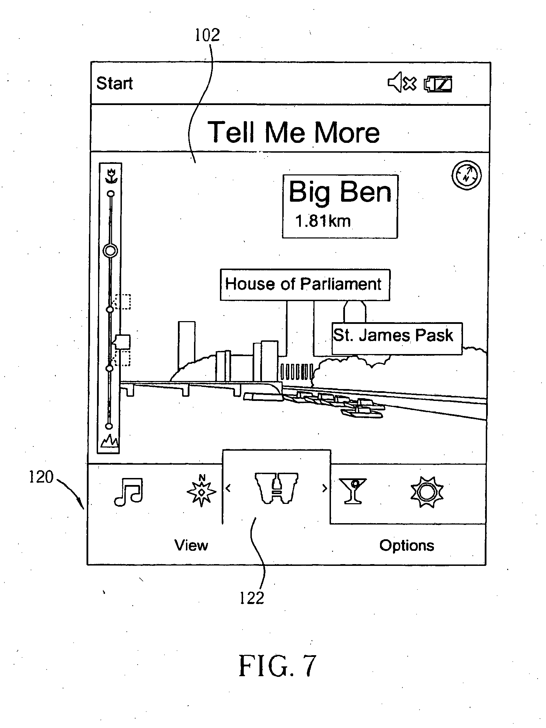

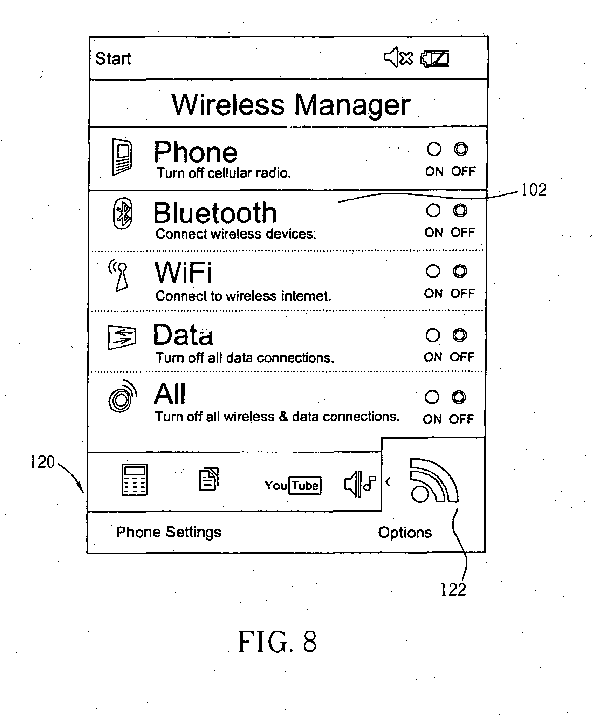

Please refer to Figs.6-8, which show the contents of the display 102 when different tabs of the navigation section 120 are chosen as the selected tab 122. Unfortunately, with the increasing amount of functions available in modern devices, not all of the tabs of the navigation section 120 are visible on the display 102 at the same time. Therefore, users must scroll the window in order to see other tabs that are not currently shown on the display 102. For example, using the screen orientation and the tab layout of Figs. 6-8, a user would have to scroll left and right to see other tabs that are not visible on the screen. The present invention thus provides a novel touch-based navigation system for quickly navigating through the tabs of the navigation section 120.

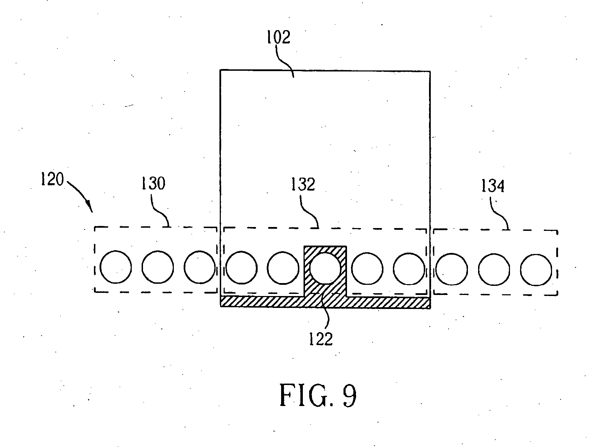

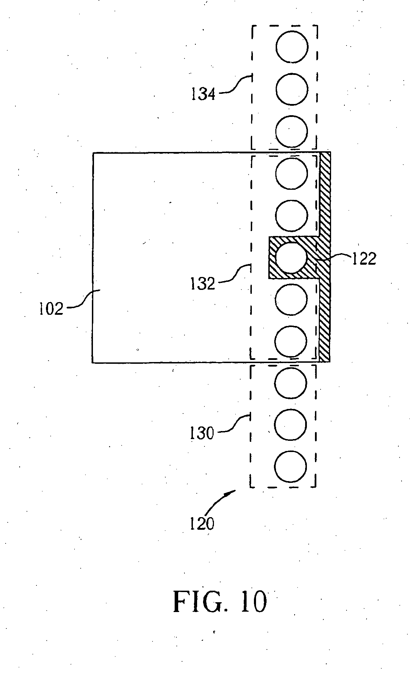

Please refer to Figs.9 and 10. Figs.9 and 10 illustrate a displayed segment 132 and non-displayed segments 130 and 134 of the navigation section 120. In both of Figs.9 and 10, the displayed segment 132 is shown as containing a set of tabs taken from a middle portion of the tabs in the navigation section 120. In Fig.9, a first non-displayed segment 130 contains tabs that are positioned to the left of the displayed segment 132, whereas a second non-displayed segment 134 contains tabs that are positioned to the right of the displayed segment 132. Similarly, in Fig.10, the first non-displayed segment 130 contains tabs that are positioned under the displayed segment 132, whereas the second non-displayed segment 134 contains tabs that are positioned on top of the displayed segment 132. Thus, the tabs can be positioned horizontally or vertically and may be displayed on any position of the display 102.

The device provides four ways of navigating between tabs of the navigation section 120. First of all, if the display 102 is a touch-sensitive display, the user of the portable digital information device 100 can simply use a finger or a stylus to tap on an icon corresponding to a tab that is currently in the displayed segment 132 of the navigation section 120. Secondly, a directional pad in the control buttons 108 can be used to navigate through the various tabs of the navigation section 120, including the tabs in both the displayed segment 132 and the non-displayed segments 130 and 134 of the navigation section 120.

A third method assumes that the display 102 is a touch-sensitive display. In the third method, the users can drag a tab such as the selected tab 122 through the sequence of icons in the navigation section 120 by swiping their finger across the touch screen until they reach the desired icon. As the user drags the tab, the icons shown in the displayed segment 132 of the navigation section 120 shift in the opposite direction, such that, when the user's finger reaches the end of the display 102, the last icon in the sequence is positioned under their finger. Likewise, when the user's finger is half way across the display 102, the sequence of icons will be positioned such that the middle icon is under their finger. This enables the user to easily navigate a sequence of icons that is wider than the visible extents of the display 102. Additionally, as the user drags the tab through the sequence of icons, the tab snaps to the nearest icon position, for easier targeting of icons.

A fourth method is similar to the third method, but makes use of the touch-sensitive area 104 that is formed separate from the display 102, as shown in Fig.5. In Fig.5, the touch-sensitive area 104 is formed at a bottom of the housing of the portable digital information device 100, for allowing a user to swipe his finger across the touch-sensitive area 104 for navigating through the tabs of the navigation section 120. By dragging the user's finger across the touch-sensitive area 104, the tab graphic will be positioned adjacent to the position of the finger. As aforementioned, an amount of position change of the displayed tabs is related to a distance in which the user drags the finger across the touch-sensitive area 104.

In addition to visually seeing the icons corresponding to the tabs move as the user drags his finger across the display 102 or the touch-sensitive area 104, haptic feedback can also be used to provide the user with haptic pulses (vibration pulses) indicating that the icons shown in the displayed segment 132 of the navigation section 120 have shifted by another icon. The use of haptic feedback allows users to better navigate through the tabs of the navigation section 120 without having to look at the display 102 of the portable digital information device 100.

In summary, the present invention provides users with a convenient way of navigating between numerous tabs in a graphical user interface, and allows quick access to tabs that are not currently shown on the display. In addition, users can rely on muscle memory to choose commonly selected tabs without having to look at the display. This can further be enhanced with haptic feedback or sound feedback for allowing the user to know how many discrete positions the tabs have been moved.

## Claims

1. A method of navigating between different tabs in a user interface of a portable digital information device (100), the method comprising:
displaying a first set of tabs and corresponding icons sequentially arranged along a direction on a tough-sensitive display (102) of the portable digital information device (100);
changing a position of tabs displayed along the direction of the display (102) in response to receiving an input from the user; and
displaying a second set of tabs in response to the change in position of the tabs;
**characterized by**
receiving touch input from a user in which the user touches a touch-sensitive area of the display (102) of the portable digital information device (100) and drags a selected tab (122) across the touch-sensitive area (102) until the user's finger reaches the desired icon and that the position of the icons move in a direction opposite to the direction along which the user drags the selected tab (122) across the touch-sensitive area (102) such that when the user's finger reaches an end of the touch-sensitive area (102), the last icon in the sequence is positioned under the finger, and when the user's finger is half way across the touch-sensitive area (102), the sequence of icons will be positioned such that the middle icon is under the finger;
wherein the second set of tabs comprises at least one tab that is not displayed when displaying the first set of tabs and that an amount of position change of the displayed tabs is related to a distance in which the user drags the finger across the touch-sensitive area (102).

2. The method of claim 1, **characterized in that** the touch-sensitive area (102) is a touch-sensitive device formed on a housing (112) of the portable digital information device (100).

3. The method of claim 1, **characterized in that** the display (102) of the portable digital information device (100) is a touch-sensitive display (102), and the touch-sensitive area (102) is a portion of the touch-sensitive display (102).

4. The method of claim 3, **characterized in that** the touch-sensitive area (102) is a portion of the touch-sensitive display (102) at which the tabs are displayed.

5. The method of claim 1, **characterized in that** the tabs are arranged horizontally or vertically on the display (102) of the portable digital information device (100).

6. A portable digital information device (100) adapted for receiving input from a user for navigating between different tabs in a user interface of the portable digital information device (100), the portable digital information device (100) comprising a touch-sensitive display (102) and a processor (106) arranged to carry out the method according to claim 1.

7. The portable digital information device (100) of claim 6, **characterized in that** the touch-sensitive area (102) is a touch-sensitive device formed on a housing (112) of the portable digital information device (100).

8. The portable digital information device (100) of claim 6, **characterized in that** the display (102) of the portable digital information device (100) is a touch-sensitive display (102), and the touch-sensitive area (102) is a portion of the touch-sensitive display (102).

9. The portable digital information device (100) of claim 8, **characterized in that** the touch-sensitive area (102) is a portion of the touch-sensitive display (102) at which the tabs are displayed.

10. The portable digital information device (100) of claim 6, **characterized in that** the tabs are arranged horizontally or vertically on the display (102) of the portable digital information device (100).

## Patentansprüche

1. Verfahren zum Navigieren zwischen unterschiedlichen Registerkarten in einer Benutzeroberfläche einer tragbaren digitalen Informationsvorrichtung (100), wobei das Verfahren aufweist:
- Anzeigen eines ersten Satzes von Registerkarten und entsprechenden Symbolen, die entlang einer Richtung auf einem berührungsssensitiven Display (102) der tragbaren digitalen Informationsvorrichtung (100) sequentiell angeordnet sind;
- Ändern einer Position von Registerkarten, die entlang der Richtung des Displays (102) angezeigt werden, als Antwort auf einen Empfang einer Eingabe vom Benutzer; und
- Anzeigen eins zweiten Satzes von Registerkarten als Antwort auf die Änderung einer Position der Registerkarten;
**gekennzeichnet durch**
- Empfangen einer Berührungseingabe von einem Benutzer, indem der Benutzer einen berührungssensitiven Bereich des Displays (102) der tragbaren digitalen Informationsvorrichtung (100) berührt, und eine ausgewählte Registerkarte (122) über den berührungssensitiven Bereich (102) zieht, bis der Finger des Benutzers das gewünschte Symbol erreicht und wobei sich die Position der Symbole in eine Richtung bewegt, die entgegengesetzt zu der Richtung ist, an der der Benutzer die ausgewählte Registerkarte (122) über den berührungssensitiven Bereich (102) entlangzieht, so dass, wenn der Finger des Benutzers ein Ende des berührungssensitiven Bereichs (102) erreicht, das letzte Symbol in der Reihenfolge unter dem Finger positioniert wird, und wenn sich der Finger des Benutzers auf halben Wege über dem berührungssensitiven Bereich (102) befindet, die Reihenfolge der Symbole positioniert wird, so dass sich das mittlere Symbol unter dem Finger befindet;
- wobei der zweite Satz von Registerkarten zumindest eine Registerkarte aufweist, die nicht angezeigt wird, wenn der erste Satz von Registerkarten angezeigt wird und wobei sich ein Ausmaß einer Positionsänderung der angezeigten Registerkarten auf einen Abstand bezieht, in dem der Benutzer den Finger über den berührungssensitiven Bereich (102) zieht.

2. Verfahren gemäß Anspruch 1, **dadurch gekennzeichnet, dass** der berührungssensitive Bereich (102) eine berührungssensitive Vorrichtung ist, die auf einem Gehäuse (112) der tragbaren digitalen Informationsvorrichtung (100) ausgebildet ist.

3. Verfahren gemäß Anspruch 1, **dadurch gekennzeichnet, dass** das Display (102) der tragbaren digitalen Informationsvorrichtung (100) ein berührungssensitives Display (102) ist, und der berührungssensitive Bereich (102) ein Bereich des berührungssensitiven Displays (102) ist.

4. Verfahren gemäß Anspruch 3, **dadurch gekennzeichnet, dass** der berührungssensitive Bereich (102) ein Bereich des berührungssensitiven Displays (102) ist, an dem die Registerkarten angezeigt werden.

5. Verfahren gemäß Anspruch 1, **dadurch gekennzeichnet, dass** die Registerkarten auf dem Display (102) der tragbaren digitalen Informationsvorrichtung (100) horizontal oder vertikal angeordnet sind.

6. Tragbare digitale Informationsvorrichtung (100), ausgebildet zum Empfangen einer Eingabe von einem Benutzer zum Navigieren zwischen unterschiedlichen Registerkarten in einer Benutzeroberfläche der tragbaren digitalen Informationsvorrichtung (100), wobei die tragbare digitale Informationsvorrichtung (100) ein berührungssensitives Display (102) und einen Prozessor (106) aufweist, der angeordnet ist, um das Verfahren gemäß Anspruch 1 auszuführen.

7. Tragbare digitale Informationsvorrichtung (100) gemäß Anspruch 6, **dadurch gekennzeichnet, dass** der berührungssensitive Bereich (102) eine berührungssensitive Vorrichtung ist, die auf einem Gehäuse (112) der tragbaren digitalen Informationsvorrichtung (100) ausgebildet ist.

8. Tragbare digitale Informationsvorrichtung (100) gemäß Anspruch 6, **dadurch gekennzeichnet, dass** das Display (102) der tragbaren digitalen Informationsvorrichtung (100) ein berührungssensitives Display (102) ist, und der berührungssensitive Bereich (102) ein Bereich des berührungssensitiven Displays (102) ist.

9. Tragbare digitale Informationsvorrichtung (100) gemäß Anspruch 8, **dadurch gekennzeichnet, dass** der berührungssensitive Bereich (102) ein Bereich des berührungssensitiven Displays (102) ist, an dem die Registerkarten angezeigt werden.

10. Tragbare digitale Informationsvorrichtung (100) gemäß Anspruch 6, **dadurch gekennzeichnet, dass** die Registerkarten auf dem Display (102) der tragbaren digitalen Informationsvorrichtung (100) horizontal oder vertikal angeordnet sind.

## Revendications

1. Procédé de navigation entre différents onglets dans une interface utilisateur d'un dispositif d'information numérique portable (100), le procédé comprenant les étapes consistant à :
afficher un premier ensemble d'onglets et d'icônes correspondantes agencés séquentiellement le long d'une direction sur un écran d'affichage tactile (102) du dispositif d'information numérique portable (100) ;
modifier une position d'onglets affichés le long de la direction de l'écran d'affichage (102) en réponse à la réception d'une entrée provenant de l'utilisateur ; et
afficher un second ensemble d'onglets en réponse à la modification de la position des onglets ;
**caractérisé en ce qu'**il comprend les étapes consistant à :
recevoir une entrée tactile provenant d'un utilisateur, dans laquelle l'utilisateur touche une zone tactile de l'écran d'affichage (102) du dispositif d'information numérique portable (100) et fait glisser un onglet sélectionné (122) à travers la zone tactile (102) jusqu'à ce que le doigt de l'utilisateur atteigne l'icône souhaitée et que la position des icônes se déplace dans une direction opposée à la direction le long de laquelle l'utilisateur fait glisser l'onglet sélectionné (122) à travers la zone tactile (102) de sorte que, lorsque le doigt de l'utilisateur atteint une extrémité de la zone tactile (102), la dernière icône dans la séquence est positionnée sous le doigt, et lorsque le doigt de l'utilisateur est à mi-chemin à travers la zone tactile (102), la séquence d'icônes est positionnée de sorte que l'icône centrale est située sous le doigt ;
dans lequel le second ensemble d'onglets comporte au moins un onglet qui n'est pas affiché lors de l'affichage du premier ensemble d'onglets, et dont une quantité de modification de position des onglets affichés correspond à une distance sur laquelle l'utilisateur fait glisser le doigt à travers la zone tactile (102).

2. Procédé selon la revendication 1, **caractérisé en ce que** la zone tactile (102) est un dispositif tactile formé sur un boîtier (112) du dispositif d'information numérique portable (100).

3. Procédé selon la revendication 1, **caractérisé en ce que** l'écran d'affichage (102) du dispositif d'information numérique portable (100) est un écran d'affichage tactile (102), et la zone tactile (102) représente une partie de l'écran d'affichage tactile (102).

4. Procédé selon la revendication 3, **caractérisé en ce que** la zone tactile (102) représente une partie de l'écran d'affichage tactile (102) au niveau de laquelle les onglets sont affichés.

5. Procédé selon la revendication 1, **caractérisé en ce que** les onglets sont agencés horizontalement ou verticalement sur l'écran d'affichage (102) du dispositif d'information numérique portable (100).

6. Dispositif d'information numérique portable (100) apte à recevoir une entrée provenant d'un utilisateur, en vue de naviguer entre différents onglets dans une interface utilisateur du dispositif d'information numérique portable (100), le dispositif d'information numérique portable (100) comprenant un écran d'affichage tactile (102) et un processeur (106) agencé de manière à mettre en oeuvre le procédé selon la revendication 1.

7. Dispositif d'information numérique portable (100) selon la revendication 6, **caractérisé en ce que** la zone tactile (102) est un dispositif tactile formé sur un boîtier (112) du dispositif d'information numérique portable (100).

8. Dispositif d'information numérique portable (100) selon la revendication 6, **caractérisé en ce que** l'écran d'affichage (102) du dispositif d'information numérique portable (100) est un écran d'affichage tactile (102), et la zone tactile (102) représente une partie de l'écran d'affichage tactile (102).

9. Dispositif d'information numérique portable (100) selon la revendication 8, **caractérisé en ce que** la zone tactile (102) représente une partie de l'écran d'affichage tactile (102) au niveau de laquelle les onglets sont affichés.

10. Dispositif d'information numérique portable (100) selon la revendication 6, **caractérisé en ce que** les onglets sont agencés horizontalement ou verticalement sur l'écran d'affichage (102) du dispositif d'information numérique portable (100).
